# EUROPEAN PATENT APPLICATION

(11) **EP 3 838 640 A1**
(43) Date of publication of application: **23.06.2021**
(21) Application number: 20213986.1
(22) Date of filing: 15.12.2020
(51) Int. Cl.: B60K 1/02

(54) **LUBRICATION DEVICE FOR VEHICLE DRIVE-FORCE TRANSMITTING APPARATUS**

(30) Priority: 19.12.2019 JP 2019229725
(71) Applicant: TOYOTA JIDOSHA KABUSHIKI KAISHA, Toyota-shi, Aichi-ken, 471-8571 (JP)
(72) Inventor: SHIMOKOBE, Yuki, Aichi-ken, 471-8571 (JP); HASEGAWA, Ryuichi, Aichi-ken, 471-8571 (JP)
(74) Representative: J A Kemp LLP

(57) **Abstract**

A lubrication device (81) for a vehicle drive-force transmitting apparatus (10) that includes a casing (44), such that an interior of the casing (44) is sectioned by a partition wall (48) into a gear room (78) and a motor room (80). The lubrication device (81) includes a communication hole (98) provided through the partition wall (48) and communicating between the gear room (78) and the motor room (80). The communication hole (98) has a gear-room-side opening (98a) and a motor-room-side opening (98b), such that the communication hole (98) opens at the gear-room-side opening (98a) in the gear room (78) and opens at the motor-room-side opening (98b) in the motor room (80). The motor-room-side opening (98b) is located on an upper side of a bearing (74a) which supports a gear mechanism (28) provided in the gear room (78) and which is held in a bearing holding wall (108) of the casing (44). The gear-room-side opening (98a) is provided in the bearing holding wall (108), and is in held in communication with a gap (110) defined between an inner race (102) and an outer race (104) of the bearing (74a).

## Description

### FIELD OF THE INVENTION

The present invention relates to a lubrication device for a vehicle drive-force transmitting apparatus including a casing that defines a motor room and a gear room.

### BACKGROUND OF THE INVENTION

There is known a vehicle drive-force transmitting apparatus including a casing that defines a motor room and a gear room such that a motor is disposed in the motor room while a gear mechanism is disposed in the gear room. As an example of such a vehicle drive-force transmitting apparatus, Patent Document 1 discloses a motor unit. In the motor unit disclosed in the Patent Document 1, a motor room and a gear room are defined in a housing, such that a motor is disposed in the motor room while a deceleration device and a differential device are disposed in the gear room. Further, a partition wall, by which an interior of the housing is sectioned into the motor room and the gear room, is provided with a partition-wall hole that communicates between the motor room and the gear room. Owing to the construction described above, an oil supplied to the motor room is moved to the gear room through the partition-wall hole, so as to be stored in an oil reservoir in the gear room. The oil stored in the oil reservoir is pumped up by a pump, and is supplied to the motor room such that the motor is cooled by the oil. Thus, the oil is circulated within the housing in the motor unit disclosed in the Patent Document 1. Further, Patent Document 2 discloses a motor in which an insulation sheet including a foam resin layer is interposed between a stator core and each of a plurality of coils wound on the stator core.

### PRIOR ART DOCUMENTS

### PATENT DOCUMENTS

Patent Document 1: WO/2018/030372
Patent Document 2: JP-2017-127063A
Patent Document 3: JP-2001-190042A
Patent Document 4: JP-2019-168064A

### SUMMARY OF THE INVENTION

By the way, in the construction disclosed in the Patent Document 1 in which the oil supplied to the motor room is moved to the gear room through a communication hole (partition-wall hole in the Patent Document 1), if foreign substances generated in the motor room are mixed into the oil, the oil containing the foreign substances is stored in the oil reservoir. Consequently, when the oil is pumped by the pump, a filter of a strainer is likely to be clogged with the foreign substances so that there is a risk that a pressure loss could be caused due to the clogging of the filter. For example, in a case in which the foam resin layer made of a foam resin is interposed between the stator core and each of the stator coils, as in the Patent Document 2, the filter of the strainer is more likely to be clogged with the foam resin that is mixed into the oil.

The present invention was made in view of the background art described above. It is therefore an object of the present invention to provide a lubrication device for a vehicle drive-force transmitting apparatus that includes a casing and a partition wall, such that an interior of the casing is sectioned by the partition wall into a motor room and a gear room, and such that a gear mechanism is disposed in the gear room while a motor is disposed in the gear room, wherein the lubricating device is capable of suppressing problem caused by foreign substances contained in an oil. This object is achieved according to the following aspects of the present invention.

According to a first aspect of the invention, there is provided a lubrication device for a vehicle drive-force transmitting apparatus that includes a casing, such that an interior of the casing is sectioned by a partition wall into a gear room and a motor room, and such that a gear mechanism is disposed in the gear room while a motor is disposed in the motor room, wherein the lubrication device comprises a communication hole provided through the partition wall and communicating between the gear room and the motor room, the communication hole having a gear-room-side opening and a motor-room-side opening, such that the communication hole opens at the gear-room-side opening in the gear room and opens at the motor-room-side opening in the motor room, wherein the motor-room-side opening is located on an upper side of a bearing which supports the gear mechanism and which is held in a bearing holding wall of the casing, and wherein the gear-room-side opening is provided in the bearing holding wall, and is in held in communication with a gap defined between an inner race and an outer race of the bearing. It is noted that "the upper side of the bearing" may be interpreted to mean the upper side of the bearing in a vertical direction of a vehicle in an installed state in which the drive-force transmitting apparatus including the lubrication device is installed in the vehicle.

According to a second aspect of the invention, in the lubrication device according to the first aspect of the invention, the motor includes a stator core, a plurality of stator coils wound on the stator core and a plurality of insulation sheets each including a foam resin layer, wherein each of the insulation sheets is interposed between the stator core and a corresponding one of the stator coils. It is possible to interpret that the motor constitutes a part of the vehicle drive-force transmitting apparatus.

According to a third aspect of the invention, in the lubrication device according to the first or second aspect of the invention, the bearing supporting the gear mechanism is a tapered roller bearing.

According to a fourth aspect of the invention, in the lubrication device according to the third aspect of the invention, the tapered roller bearing includes a plurality of tapered rollers disposed between the inner and outer races, wherein each of the tapered rollers has a small-diameter axial end face and a large-diameter axial end face that has a diameter larger than a diameter of the small-diameter axial end face, wherein the tapered roller bearing has a roller-small-diameter-side end face and a roller-large-diameter-side end face, such that the small-diameter axial end face of each of the tapered rollers constitutes a part of the roller-small-diameter-side end face of the tapered roller bearing while the large-diameter axial end face of each of the tapered rollers constitutes a part of the roller-large-diameter-side end face of the tapered roller bearing, and wherein the gear-room-side opening of the communication hole is located in a position closer to the roller-small-diameter-side end face of the tapered roller bearing than to the roller-large-diameter-side end face of the tapered roller bearing.

According to a fifth aspect of the invention, in the lubrication device according to the first through fourth aspects of the invention, the gear mechanism is a differential device.

According to a sixth aspect of the invention, the lubrication device according to the first through fifth aspects of the invention comprises: an oil reservoir provided in a lower portion of the gear room, so as to store therein an oil; and an oil pump by which the oil is to be pumped up through a strainer and is to be supplied to the motor disposed in the motor room.

In the lubrication device according to the first aspect of the invention, the gear-room-side opening of the communication hole is provided in the bearing holding wall in which the bearing is held, and is in held in communication with the gap defined between the inner race and the outer race of the bearing. Owing to this construction, an oil, which has been moved from the motor room to the gear room through the communication hole, is caused to flow into the gap of the bearing. In this instance, when the oil is passing through the gap of the bearing, foreign substances mixed or contained in the oil is crushed by the bearing into smaller pieces. Therefore, for example, in an arrangement in which the oil stored in the casing is to be pumped up by an oil pump through a strainer, it is possible to suppress clogging of a filter of the strainer.

In the lubrication device according to the second aspect of the invention, when foam resin is mixed into the oil in process of cooling the motor by the oil, it is possible to cause the foam resin to be crushed by the bearing.

In the lubrication device according to the third aspect of the invention in which the bearing is constituted by the tapered roller bearing, it is possible to increase areas of surfaces by which the foreign substances are to be crushed, as compared with an arrangement in which the bearing is constituted by another type of bearing such as a ball bearing, whereby the foreign substances can be efficiently crushed.

In the lubrication device according to the fourth aspect of the invention, the gear-room-side opening of the communication hole is located in the position closer to the roller-small-diameter-side end face of the tapered roller bearing than to the roller-large-diameter-side end face of the tapered roller bearing. Owing to this construction, much of the oil flowing out through the gear-room-side opening can be efficiently introduced into the bearing, by utilizing flow of the oil, which is forced to be drawn in a direction away from the small-diameter axial end face of the tapered roller bearing toward the large-diameter axial end face of the tapered roller bearing, when the tapered roller bearing is rotated.

In the lubrication device according to the fifth aspect of the invention, since the gear mechanism is the differential device, a large load is to be applied to the bearing supporting the differential device as the gear mechanism, so that the foreign substances contained in the oil can be efficiently crushed by the bearing in process of lubricating the bearing by the oil.

In the lubrication device according to the sixth aspect of the invention, the foreign substances mixed or contained in the oil are crushed by the bearing, so that it is possible to suppress clogging of the filter of the strainer, which could be caused in process of pumping up the oil stored in the oil reservoir the oil pump.

### BRIEF DESCRIPTION OF THE DRAWINGS

FIG. 1 is a view schematically showing, by way of example, construction of a vehicle drive-force transmitting apparatus to which the present invention is applied;
FIG. 2 is a cross sectional view taken in a plane perpendicular to a second axis CL2 in FIG. 1 and showing a stator core and stator coils of a second electric motor MG2 shown in FIG. 1;
FIG. 3 is a lubrication circuit diagram for explaining construction of a lubrication device for lubricating and cooling gears, bearings and first and second electric motors disposed in the vehicle drive-force transmitting apparatus of FIG. 1;
FIG. 4 is a view of an axle case constituting a part of a casing of the vehicle drive-force transmitting apparatus of FIG. 1, as seen from a side of a gear room of the casing;
FIG. 5 is a view of the axle case, as seen from a side of a motor room of the casing; and
FIG. 6 is a cross sectional view taken in a plane containing an axis of a communication hole which is provided in the axle case and which communicates a motor room and a gear room of the casing.

### DETAILED DESCRIPTION OF PREFERRED EMBODIMENT

Hereinafter, a preferred embodiment of the invention will be described in detail with reference to the accompanying drawings. The figures of the drawings are simplified or deformed as needed, and each portion is not necessarily precisely depicted in terms of dimension ratio, shape, etc.

### EMBODIMENT

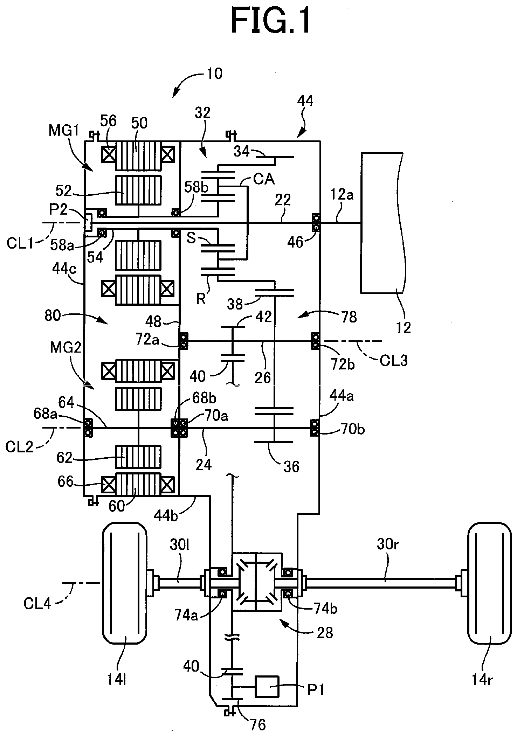

FIG. 1 is a view schematically showing, by way of example, construction of a vehicle drive-force transmitting apparatus 10 to which the present invention is applied. The drive-force transmitting apparatus 10 is provided between an engine 12 and right and left drive wheels 14r, 141 (hereinafter simply referred to as "drive wheels 14" unless they are to be distinguished from each other). The drive-force transmitting apparatus 10 is to be used advantageously in a hybrid vehicle of FF (front engine/front drive) system. The drive-force transmitting apparatus 10 is a drive-force transmitting apparatus of hybrid type, and is configured to transmit a drive force outputted from the engine 12 as a drive-force source and a drive force outputted from a second electric motor MG2 as another drive-force source, to the right and left drive wheels 14r, 141, via, for example, a differential device 28 and right and left axles 30r, 301. It is noted that the term "drive force" used in the present specification is synonymous with a drive torque or a drive power.

As shown in FIG. 1, the drive-force transmitting apparatus 10 includes an input shaft 22, a drive-force transmission shaft 24, a counter shaft 26, the above-described differential device 28, the above-described axles 30, a planetary gear device 32, an output gear 34, a reduction gear 36, a counter gear 38, a differential drive gear 42, a casing 44, a first electric motor MG1 and the above-described second electric motor MG2. The input shaft 22 is disposed to be rotatable about a first axis CL1. The drive-force transmission shaft 24 is disposed to be rotatable about a second axis CL2. The counter shaft 26 is disposed to be rotatable about a third axis CL3. The differential device 28 and the axles 30 are disposed to be rotatable about a fourth axis CL4. The planetary gear device 32, first electric motor MG1 and output gear 34 are disposed to be coaxial with the input shaft 22 and are located radially outside the input shaft 22. The reduction gear 36 is disposed on the drive-force transmission shaft 24. The second electric motor MG2 is connected to an axial end portion of the drive-force transmission shaft 24 in a drive-force transmittable manner. The counter gear 38 meshing with the output gear 34 and the differential drive gear 42 meshing with a differential ring gear 40 of the differential device 28 are disposed on the counter shaft 26. All of these rotary members are disposed in the casing 44 as a non-rotary member. It is noted that all of the first through fourth axes CL1-CL4 are rotary axes that are parallel to a width direction of the vehicle 8.

Each of the first and second electric motors MG1, MG2 may be an electric motor having a function of a motor operable to convert an electric energy into a mechanical drive force and/or a function of a generator operable to convert a mechanical drive force into an electric energy, and preferably, is a motor generator having both of the functions so as to be operated as a selected one of the motor and the generator. In the present embodiment, the first electric motor MG1 has a function of an electric generator operable to receive a reaction force from the engine 12, and a function of an electric motor operable to start the engine 12 while the engine 12 is at rest. Meanwhile, the second electric motor MG2 has a function of an electric motor functioning as a vehicle drive power source to generate a vehicle driving force, and a function of an electric generator operable to perform a regenerative operation for converting a reverse driving force received from the drive wheels 14, into an electric energy.

The input shaft 22 is disposed to be rotatable about the first axis CL1. The input shaft 22 is connected to a crank shaft 12a of the engine 12 through members such as a damper (not shown), in a drive-force transmittable manner. The input shaft 22 is held, through members such as a bearing 46, by the casing 44 as the non-rotary member, such that the input shaft 22 is rotatable about the first axis CL1. The planetary gear device 32, first electric motor MG1 and output gear 34 are disposed to be coaxial with the input shaft 22 and are located radially outside the input shaft 22.

The planetary gear device 32, which is disposed to be coaxial with the first axis CL1, is a single-pinion type planetary gear device (differential mechanism) that includes a sun gear S, a carrier CA and a ring gear R. The planetary gear device 32 serves as a drive-force distributing mechanism configured to distribute the drive force of the engine 12 to the first electric motor MG1 and the output gear 34. The sun gear S of the planetary gear device 32 is connected to the first electric motor MG1 in a drive-force transmittable manner. The carrier CA of the planetary gear device 32 is connected to the engine 12 through, for example, the input shaft 22 in a drive-force transmittable manner. The ring gear R of the planetary gear device 32 is connected to the output gear 34 in a drive-force transmittable manner.

The first electric motor MG1 is disposed in a position adjacent to the planetary gear device 32, with a partition wall 48 (that is a part of the casing 44) being located between the first electric motor MG1 and the planetary gear device 32 in a direction of the first axis CL1. The first electric motor MG1 includes an annular-shaped stator core 50 that is unrotatably fixed to the casing 44, an annular-shaped rotor 52 disposed on an inner peripheral side of the stator core 50, and a rotor shaft 54 connected to an inner periphery of the rotor 52. The stator core 50 is provided with stator coils 56 wound thereon. The rotor shaft 54 is held at its axially opposite end portions by the casing 44 through a pair of bearings 58a, 58b, such that the rotor shaft 54 is rotatable about the first axis CL1.

The output gear 34 is connected to the ring gear R of the planetary gear device 32, and meshes with the counter gear 38 that is disposed on the counter shaft 26. It is noted that the ring gear R and the output gear 34 are formed integrally with each other, namely, are constituted by a compound gear.

The drive-force transmission shaft 24 is disposed to be rotatable about the second axis CL2, and is rotatably held at its axially opposite end portions by the casing 44 through a pair of bearings 70a, 70b. The reduction gear 36 is disposed on the drive-force transmission shaft 24. The second electric motor MG2 is connected to an axial end portion of the drive-force transmission shaft 24 in a drive-force transmittable manner. The partition wall 48 is located between the second electric motor MG2 and the reduction gear 36 in a direction of the second axis CL2.

The second electric motor MG2 includes an annular-shaped stator core 60 that is unrotatably fixed to the casing 44, an annular-shaped rotor 62 disposed on an inner peripheral side of the stator core 60, and a rotor shaft 64 connected to an inner periphery of the rotor 62. The stator core 60 is provided with stator coils 66 wound thereon. The rotor shaft 64 is held at its axially opposite end portions by the casing 44 through a pair of bearings 68a, 68b, such that the rotor shaft 64 is rotatable about the second axis CL2.

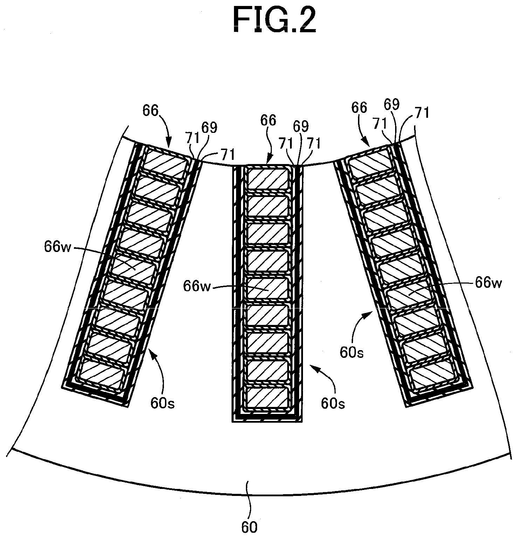

FIG. 2 is a cross sectional view taken in a plane perpendicular to the second axis CL2 and showing the stator core 60 and the stator coils 66 of the second electric motor MG2. In FIG. 2, an upward direction in the drawing sheet corresponds to a direction away from an outer periphery of the stator core 60 toward an inner periphery of the stator core 60, while a downward direction in the drawing sheet corresponds to a direction away from the inner periphery of the stator core 60 toward the outer periphery of the stator core 60. It is noted that only a part, in its circumferential direction, of the stator core 60 is shown in the cross sectional view of FIG. 2. As shown in FIG. 2, the stator core 60 has a plurality of radially extending slots 60s each extending radially outwardly from the inner periphery of the stator core 60, such that the radially extending slots 60s are arranged equi-angularly in a circumferential direction of the stator core 60. The stator coils 66 are provided in the respective radially extending slots 60s. The second electric motor MG2 includes, in addition to the stator core 60 and the stator coils 66, a plurality of insulation sheets 69 each of which is interposed between the stator core 60 and a winding 66w of a corresponding one of the stator coils 66. Each of the insulation sheets 69 is constituted by, for example, an insulation paper of single-layer or multi-layer, and extends along a wall surface of a corresponding one of the radially extending slots 66 of the stator core 60. Each of the insulation sheets 69 includes at least one foam resin layer in the form of two foam resin layers 71 that are provided on respective surfaces of each insulation sheet 69 that are opposed to the stator core 60 and a corresponding one of the stator coils 66. It is noted that the second electric motor MG2 corresponds to "motor" recited in the appended claims.

Referring to FIG. 1, the reduction gear 36 is formed integrally with the drive-force transmission shaft 24, and meshes with the counter gear 38 disposed on the counter shaft 26. The number of teeth of the reduction gear 36 is smaller than the number of teeth of the counter gear 38. Thus, rotation of the second electric motor MG2 is transmitted to the counter shaft 26 through the reduction gear 36 and the counter gear 38, such that a rotational speed of the counter shaft 26 is made lower than a rotational speed of the second electric motor MG2.

The counter shaft 26 is provided to be rotatable about the third axis CL3. The counter shaft 26 is held at its axially opposite end portions by the casing 44 through a pair of bearings 72a, 72b, such that the counter shaft 26 is rotatable about the third axis CL3. The counter gear 38 and the differential drive gear 42 are disposed on the counter shaft 26, unrotatably relative to the counter shaft 26 that is to be rotated about the third axis CL3.

The counter gear 38 meshes with the output gear 34 and the reduction gear 36 so that the drive force outputted from the engine 12 and/or the drive force outputted from the second electric motor MG2 are to be transmitted. The differential drive gear 42 meshes with a differential ring gear 40 of the differential device 28. Thus, when the drive force drive force outputted from the engine 12 and/or the drive force outputted from the second electric motor MG2 are transmitted to the counter gear 38 through the output gear 34 and/or the reduction gear 36, the drive force or forces are transmitted to the differential device 28 through the counter shaft 26 and the differential drive gear 42.

The differential device 28 and the axles 30r, 301 are disposed to be rotatable about the fourth axis CL4. The differential device 28 is constituted by a well-known differential mechanism, and is configured to transmit the drive force to the right and left axles 30r, 301 while allowing rotation of each of the axles 30r, 301 relative to the other of the axles 30r, 301. It is noted that detailed description of the differential device 28, which is a known device, is not provided. The differential device 28 is held, at its opposite end portions that are opposite to each other in a direction of the fourth axis CL4, by the casing 44 through a pair of bearings 74a, 74b, such that the differential device 28 is rotatable about the fourth axis CL4. In the present embodiment, each of the bearings 74a, 74b is constituted by a tapered roller bearing.

In the drive-force transmitting apparatus 10 constructed as described above, the drive force of the engine 12 is transmitted to the right and left drive wheels 14r, 141 through the planetary gear device 32, output gear 34, counter gear 38, counter shaft 26, differential drive gear 42, differential device 28 and axles 30r, 301 in this order of description. Further, the drive force of the second electric motor MG2 is transmitted to the right and left drive wheels 14r, 141 through the rotor shaft 64, drive-force transmission shaft 24, reduction gear 36, counter gear 38, counter shaft 26, differential drive gear 42, differential device 28 and axles 30r, 301 in this order of description.

The casing 44 of the drive-force transmitting apparatus 10
is constituted by a housing 44a, an axle case 44b and a case cover 44c that are fixed to one another. The axle case 44b opens in its opposite ends that are opposite to each other in the direction of the first axis CL1. The axle case 44b is fixedly connected at one of the openings to the housing 44a through screw bolts, such that the one of the openings is enclosed by the housing 44a. The axle case 44b is fixedly connected at the other of the openings to the case cover 44c through screw bolts, such that the other of the openings is enclosed by the case cover 44c.

The axle case 40b is provided with the partition wall 48 that extends in a direction perpendicular to the first axis CL1. By the partition wall 48, an interior of the casing 44 is sectioned into a gear room 78 and a motor room 80, such that various gears or devices such as the planetary gear device 32, output gear 34, counter gear 38, reduction gear 36 and differential device 28 are disposed in the gear room 78 and such that the first and second electric motors MG1, MG2 are disposed in the motor room 80.

The differential ring gear 40 of the differential device 28 meshes with a pump driving gear 76 that is provided to rotate or drive a first oil pump P1. The first oil pump P1 is a mechanical oil pump that is connected to the differential ring gear 40 of the differential device 28 through the pump driving gear 76 in a drive-force transmittable manner. When the differential ring gear 40 of the differential device 28 is rotated, the first oil pump P1 is mechanically rotated or driven together with rotation of the differential ring gear 40.

The drive-force transmitting apparatus 10 includes, in addition to the first oil pump PI, another mechanical pump in the form of a second oil pump P2 that is be rotated or driven by the engine 12. The oil pump P2 is disposed on one of opposite end portions of the input shaft 22 which is remote from the engine 12 in an axial direction of the input shaft 22. The second oil pump P2 includes a drive gear (not shown) that is disposed on the above-described one of the opposite end portions of the input shaft 22, so that the second oil pump P2 is rotated or driven together with rotation of the engine 12. Therefore, with the engine 12 being rotated, the second oil pump P2 is driven whereby the oil is discharged from the second oil pump P2.

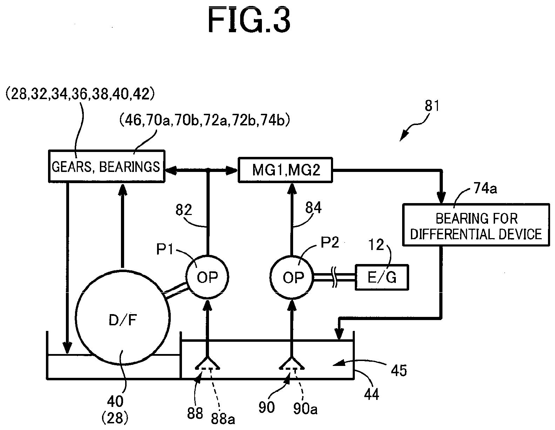

FIG. 3 is a lubrication circuit diagram for explaining construction of a lubrication device 81 for lubricating and cooling the gears, the bearings and the first and second electric motors MG1, MG2 disposed in the vehicle drive-force transmitting apparatus 10. An oil reservoir 45 is provided in a lower portion of the gear room 78 in a direction of a vertical line, i.e., in a vertical direction, so as to store therein an oil. The lubrication device 81 is constructed such that the oil stored in the oil reservoir 45 is to be supplied to various gears (such as the gears 28, 32, 34, 36, 38, 40, 42) and various bearings (such as the bearings 46, 70a, 70b, 72a, 72b, 74b) that are disposed in the gear room 78 and also to the first and second electric motors MG1, MG2 that are disposed in the motor room 80.

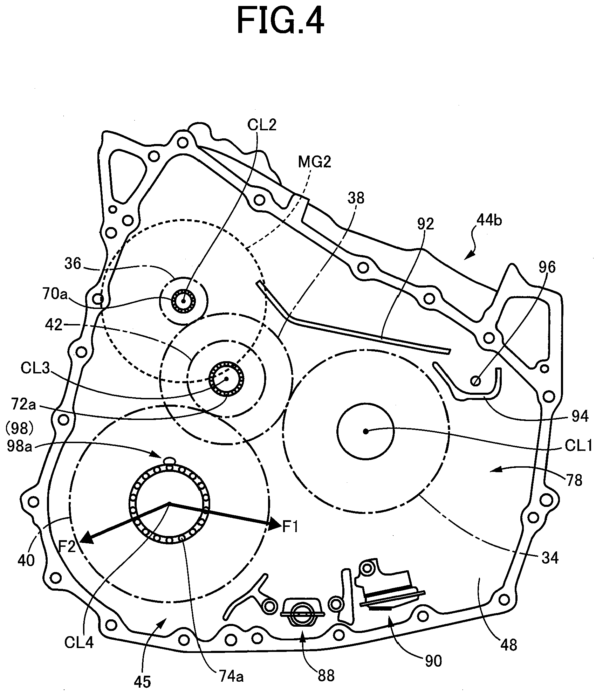

The differential ring gear 40 of the differential device 28 is partially immersed in the oil stored in the oil reservoir 45, so that the stored oil is scooped up by the differential ring gear 40 when the differential ring gear 40 is rotated. A part of the scooped oil is to be supplied the gears and bearings disposed in the gear room 78, while the other of the scooped oil is to be supplied to the first and second electric motors MG1, MG2 and the bearings 58a, 58b, 68a, 68b supporting the first and second electric motors MG1, MG2 disposed in the motor room 80 through an oil hole (through-hole) 96 (see FIG. 4) that is provided through the partition wall 48.

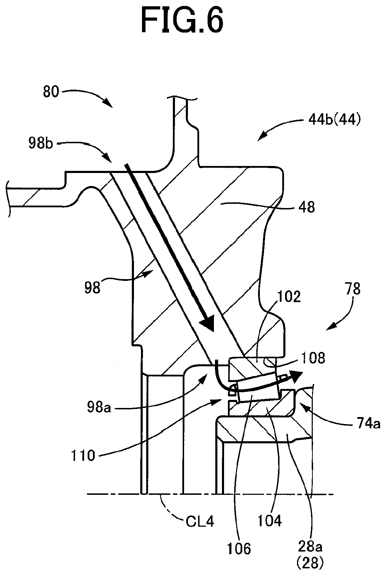

The first oil pump P1 is to be rotated or driven together with rotation of the differential ring gear 40. With the first oil pump P1 being driven, the oil stored in the oil reservoir 45 is pumped up through a first strainer 88 and is them delivered to a first delivery passage 82. A part of the oil delivered to the first delivery passage 82 is supplied to the gears and bearings disposed in the gear room 78 while the other of the oil delivered to the first delivery passage 82 is supplied to the first and second electric motors MG1, MG2 disposed in the motor room 80 through the oil hole 96 (see FIG. 4). The second oil pump P2 is to be rotated or driven by the engine 12. With the second oil pump P2 being driven, the oil stored in the oil reservoir 45 is pumped up through a second strainer 90 and is them delivered to a second delivery passage 84. The oil delivered to the second delivery passage 84 is supplied to the first and second electric motors MG1, MG2 disposed in the motor room 80. Further, the oil supplied to the second electric motor MG2 is supplied through a communication hole (through-hole) 98 (see FIG. 6) to the bearing 74a by which the differential device 28 is rotatably supported. It is noted that either one of the first and second strainers 88, 90 corresponds to "strainer" recited in the appended claims and that either one of the first and second oil pumps PI, P2 corresponds to "oil pump" recited in the appended claim.

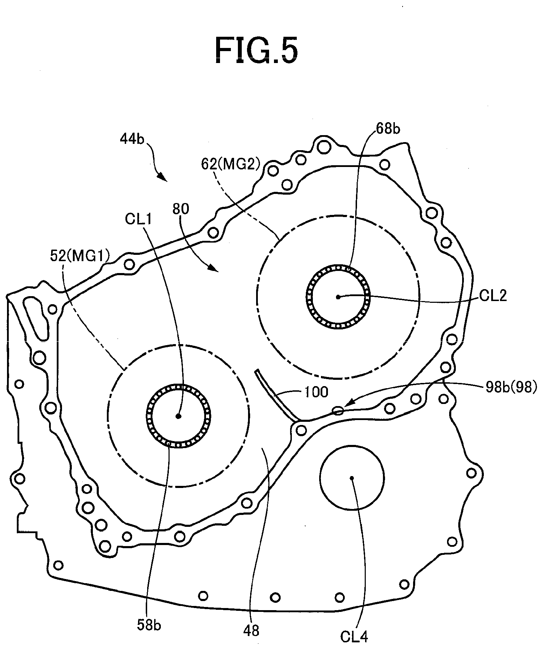

FIG. 4 is a view of the axle case 44b constituting a part of the casing 44, as seen from a side of the gear room 78. FIG. 5 is a view of the axle case 44b, as seen from a side of the motor room 80. In FIG. 4, an upward direction in the drawing sheet corresponds to an upward direction (in the direction of the vertical line) of the vehicle in an installed state in which the casing 44, i.e., the drive-force transmitting apparatus 10, is installed in the vehicle, and a rightward direction in the drawing sheet corresponds to a forward direction of the vehicle in the installed state. It is noted that a vertical direction in the drawing sheet of FIG. 4 corresponds to a vertical direction of the drive-force transmitting apparatus 10, and that a lower portion of the casing 44 constitutes a bottom wall 44d of the casing 44 which defines the above-described oil reservoir 45. In FIG. 5, an upward direction in the drawing sheet corresponds to the upward direction of the vehicle in the installed state, and a leftward direction in the drawing sheet corresponds to the forward direction of the vehicle in the installed state.

In FIG. 4, a circle having a center lying on the first axis CL1 and indicated by one-dot chain line represents a pitch circle of the output gear 34 when the output gear 34 is placed in a predetermined position lying on the first axis CL1. Further, a circle having a center lying on the second axis CL2 and indicated by one-dot chain line represents a pitch circle of the reduction gear 36 when the reduction gear 36 is placed in a predetermined position lying on the second axis CL2. Larger and smaller circles having respective centers lying on the third axis CL3 and indicated by one-dot chain lines represent pitch circles of the counter gear 38 and the differential drive gear 42, respectively, when the counter gear 38 and the differential drive gear 42 are placed in respective predetermined position lying on the third axis CL3. A circle having a center lying on the fourth axis CL4 and indicated by one-dot chain line represents a pitch circle of the differential ring gear 40 when the differential ring gear 40 is placed in a predetermined position lying on the fourth axis CL4. The gear room 78 is a space in which the gears such as the output gear 34, reduction gear 36, counter gear 38, differential ring gear 40 and differential drive gear 42 are stored or disposed. Further, FIG. 4 shows bearings 70a, 72a, 74a that are fixedly held in the axle case 44b, wherein the bearing 70a supports the drive-force transmission shaft 24, the bearing 72a supports the counter shaft 26 and the bearing 74a supports the differential device 28. It is noted that a circle having a center lying on the second axis CL2 and indicated by broken line represents a position of the second electric motor MG2 that is disposed in the motor room 80. As shown in FIG. 4, the bearing 74a supporting the differential device 28 is located on a lower side of the second electric motor MG2, and overlaps with the second electric motor MG2 in the direction of the vertical line, i.e., a vertical direction of the vehicle.

The oil reservoir 45 is provided in the lower portion of the gear room 78 in the direction of the vertical line, so that the oil is stored in the oil reservoir 45. The differential ring gear 40 is partially immersed in the oil stored in the oil reservoir 45. Therefore, during running of the vehicle, the stored oil is scooped up by the differential ring gear 40, and the scooped oil is supplied to the gears and bearings that are disposed in the gear room 78. The axle case 44b includes an upper portion in the direction of the vertical line. In the upper portion of the axle case 44b, there are a rib 92 and a catch tank 94 that extend from the partition wall 48 in a direction perpendicular to the partition wall 48, so that a part of the oil scooped up by the differential ring gear 40 is supplied through the rib 92 to the catch tank 94 whereby the part of the scooped oil is stored in the catch tank 94. The oil stored in the catch tank 94 is caused to pass through the oil hole 96 provided though the partition wall 48, so as to be supplied to the motor room 80.

In the lower portion of the gear room 78 (in the direction of the vertical line) in which the oil reservoir 45 is provided, the first and second strainers 88, 90 are also provided. Each of the first and second strainers 88, 90 has an inlet port that is immersed in the oil stored in the oil reservoir 45 of the gear room 78, so that the oil stored in the oil reservoir 45 can be sucked through the inlet port.

The first strainer 88 is connected to the inlet port of the first oil pump PI, so that, with the first oil pump P1 being driven, the oil stored in the oil reservoir 45 of the gear room 78 is sucked into the first oil pump P1 through the first strainer 88, and is delivered to the first delivery passage 82 (that is not shown in FIG. 4). A filter 88a (see FIG. 3) is provided inside the first strainer 88, so that foreign substances mixed or contained in the oil is caused to stick to the filter 88a, so as to be removed from the oil while the oil is passing through the filter 88a.

The second strainer 90 is connected to the inlet port of the second oil pump P2, so that, with the second oil pump P2 being driven, the oil stored in the oil reservoir 45 of the gear room 78 is sucked into the second oil pump P2 through the second strainer 90, and is delivered to the second delivery passage 84 (that is not shown in FIG. 4). A filter 90a (see FIG. 3) is provided inside the second strainer 90, so that the foreign substances mixed or contained in the oil is caused to stick to the filter 90a, so as to be removed from the oil while the oil is passing through the filter 90a.

In FIG. 5, a circle having a center lying on the first axis CL1 and indicated by one-dot chain line represents an outside diameter of the rotor 52 of the first electric motor MG1 when the first electric motor MG1 is placed in a predetermined position lying on the first axis CL1. Further, a circle having a center lying on the second axis CL2 and indicated by one-dot chain line represents an outside diameter of the rotor 62 of the second electric motor MG2 when the second electric motor MG2 is placed in a predetermined position lying on the second axis CL2. Further, FIG. 5 shows the bearings 58b, 68b that are fixedly held in the axle case 44b, wherein the bearing 58b rotatably supports the rotor shaft 54 of the first electric motor MG1 while the bearing 68b rotatably supports the rotor shaft 64 of the second electric motor MG2. Between the first and second electric motors MG1, MG2, a rib 100 is provided to extend in a space between the first and second electric motors MG1, MG2. With provision of the rib 100, the oil is stored on a lower side of the second electric motor MG2.

As described above, the oil stored in the oil reservoir 45 provided in the lower portion of the gear room 78 is scooped up by the differential ring gear 40, and the gears and bearings disposed in the gear room 78 are lubricated by the scooped oil. However, a loss is caused by the scooping of the oil by the differential ring gear 40 whereby an efficiency is problematically reduced. Further, since the gear room 78 is not provided with a device for increasing temperature of the oil, a drag resistance generated in each of the bearings in the gear room 78 could be problematically increased when the temperature of the oil supplied to the bearings is lowered.

For solving these problems, the communication hole 98 is provided through the partition wall 48 by which the interior of the axle case 44b is sectioned into the gear room 78 and the motor room 80, such that the gear room 78 and the motor room 80 are held in communication through the communication hole 98. The communication hole 98 is provided such that the oil having cooled the second electric motor MG2 is supplied to the bearing 74a by which the differential device 28 is rotatably supported. Specifically described, as shown in FIG. 4, the communication hole 98 has a gear-room-side opening 98a that is located in a position in which the bearing 74a supporting the differential device 28 is located. Further, as shown in FIG. 5, the communication hole 98 has a motor-room-side opening 98b that is located in a position which is lower than the second electric motor MG2 and which overlaps with the second electric motor MG2 in the direction of the vertical line. The motor-room-side opening 98b is located on an upper side of the gear-room-side opening 98a in the direction of the vertical line. Therefore, when the oil having cooled the second electric motor MG2 is dropped by its own weight, the dropped oil is caused to flow into the communication hole 98 through the motor-room-side opening 98b and to flow out of the communication hole 98 through the gear-room-side opening 98a. In this instance, owing to provision of the rib 100, the oil dropped from the second electric motor MG2 is guided to the motor-room-side opening 98b so as to be caused to efficiently flow into the communication hole 98. Further, with the oil being caused to flow into the communication hole 98 through the motor-room-side opening 98b, an upper surface or level of the oil stored on a lower side of the electric motor MG2 is not excessively increased so that the rotor 62 of the second electric motor MG2 is avoided from being immersed in the oil. Consequently, it is possible to avoid a loss that could be caused if the rotor 62 is caused to stir the oil, and to avoid a so-called breather blow that could be caused also if the rotor 62 is caused to stir the oil. It is noted that the gear-room-side opening 98a and the motor-room-side opening 98b correspond to "gear-room-side opening" and "motor-room-side opening" that are recited in the appended claims, and the differential device 28 correspond to "gear mechanism" recited in the appended claims.

FIG. 6 is a cross sectional view taken in a plane containing an axis of the communication hole 98 provided in the axle case 44b. It is noted that FIG. 6 shows the bearing 74a fitted in the axle case 44b and also a part (i.e., cylindrical portion) of a differential case 28a of the differential device 28, which is rotatably supported by the bearing 74a.

As shown in FIG. 6, in the motor room 80, the communication hole 98 has the gear-room-side opening 98a and the motor-room-side opening 98b, such that the communication hole 98 opens at the gear-room-side opening 98a in the gear room 78 and opens at the motor-room-side opening 98b in the motor room 80. The gear-room-side opening 98a and the motor-room-side opening 98b open in respective walls that are parallel to the fourth axis CL4. One of the walls in which the gear-room-side opening 98a of the communication hole 98 opens in the gear room 78, is an inner circumferential wall 108 in which an outer race 102 of the bearing 74a is fitted. The bearing 74a is a tapered roller bearing including the outer race 102 that is fitted at its outer circumferential surface with the inner circumferential wall 108, an inner race 104 that is fitted at its inner circumferential surface with the cylindrical portion of the differential device 28, and a plurality of tapered rollers 106 that are interposed between the outer and inner races 102, 104. Each of the tapered rollers 106 has a small-diameter axial end face and a large-diameter axial end face that has a diameter larger than a diameter of the small-diameter axial end face.

The motor-room-side opening 98b is located on an upper side of the bearing 74a supporting the differential device 28 in a vertical direction (i.e., direction of the vertical line). Further, the motor-room-side opening 98b is located on an upper side of the gear-room-side opening 98a. Therefore, as indicated by arrows in FIG. 6, the oil caused to flow into the communication hole 98 through the motor-room-side opening 98b, passes through the communication hole 98 and flows out of the communication hole 98 through the gear-room-side opening 98a. Further, the gear-room-side opening 98a is provided in the inner circumferential wall 108 of the axle case 44b in which the outer race 102 of the bearing 74a is fixedly held, and is held in communication with a gap 110 defined between the inner race 104 and the outer race 102 of the bearing 74a. Thus, the oil flowing out of the communication hole 98 through the gear-room-side opening 98a can be supplied to the bearing 74a. It is noted that the inner circumferential wall 108 corresponds to "bearing holding wall" recited in the appended claims.

As shown in FIG. 6, the gear-room-side opening 98a is located in a position that is held in communication with a roller-small-diameter-side end face of the tapered roller bearing 74a that is disposed on the fourth axis CL4, more specifically, in a position that is closer to the roller-small-diameter-side end face of the tapered roller bearing 74a than to a roller-large-diameter-side end face of the tapered roller bearing 74a. The roller-small-diameter-side end face of the tapered roller bearing 74a is defined as one of axially opposite end faces of the tapered roller bearing 74a, wherein the one of the axially opposite end faces includes a part constituted by one of axially opposite faces of the inner race 104 having a larger outside diameter where the inner race 104 has a tapered outer circumferential surface, or includes a part constituted by one of axially opposite faces of the outer race 102 having a smaller inside diameter where the outer race 102 has a tapered inner circumferential surface, as shown in FIG. 6. The roller-small-diameter-side end face of the tapered roller bearing 74a may be defined as one of axially opposite end faces of the tapered roller bearing 74a, wherein the one of the axially opposite end faces includes a part constituted by the above-described small-diameter axial end face of each of the tapered rollers 106. With the gear-room-side opening 98a being located in the position that is held in communication with the small-diameter axial end face of the tapered roller bearing 74a, owing to a pump effect caused by rotation of the inner race 104 of the bearing 74a, the oil flowing into the gap 110 is drawn in a direction away from the roller-small-diameter-side end face of the tapered roller bearing 74a toward the roller-large-diameter-side end face of the tapered roller bearing 74a, as indicated by arrow in FIG. 6. Therefore, the oil flowing out of the communication hole 98 through the gear-room-side opening 98a is initiatively guided into the gap 110 and caused to flow in the direction away from the roller-small-diameter-side end face of the tapered roller bearing 74a toward the roller-large-diameter-side end face of the tapered roller bearing 74a, whereby the bearing 74a is efficiently lubricated.

The oil having flown out of the communication hole 98 through the gear-room-side opening 98a has a temperature that has been increased when the oil cooled the second electric motor MG2, so that the drag resistance due to viscosity of the oil is reduced when the bearing 74a is lubricated by the oil. The oil having lubricated the bearing 74a is returned to the oil reservoir 45 of the gear room 78. In this instance, the oil stored in the oil reservoir 45 is warmed by the oil, which has been warmed when having cooled the second electric motor MG2 and which has then flown into the oil reservoir 45, whereby a temperature of the oil stored in the oil reservoir 45 is increased. As a result of the increase of the temperature of the oil stored in the oil reservoir 45, a resistance to stirring of the stored oil by the differential ring gear 40 is reduced whereby the loss caused by the scooping of the stored oil by the differential ring gear 40 is reduced.

By the way, as described above, in the second electric motor MG2, the insulation sheet 69 including the foam resin layer 71 is interposed between the stator core 60 and each of the stator cores 66 wound on the stator core 60, so that the foam resin could be mixed into the oil when the oil cools the second electric motor MG2. If the oil containing the foam resin is returned to the oil reservoir 45 of the gear room 78, the foam resin could be caused to adhere to the filters 88a, 90a of the respective first and second strainers 88, 90 when the oil is sucked through the filters 88, 90. Consequently, a pressure loss could be caused by clogging of the filters 88a, 90a of the respective strainers 88, 90, thereby causing a risk of reduction of an energy loss.

However, in the present embodiment, the oil having cooled the second electric motor MG2 is caused to pass through the communication hole 98 and is supplied to the bearing 74a supporting the differential device 28, and the foreign substances such as the foam resin are crushed between the tapered rollers 106 and the outer and inner races 102, 104 of the bearing 74a when the oil is passing through the gap 110 of the bearing 74a. In this instance, since the bearing 74a is constituted by the tapered roller bearing, the bearing 74a has surfaces effective to crush the foreign substances, wherein areas of the effective surfaces are larger than in a case in which the bearing 74a is constituted by another type of bearing such as a deep groove ball bearing, so that the foreign substances can be efficiently crushed. Further, a larger load is applied to the bearing 74a supporting the differential device 28 as compared with other bearings supporting gears in the drive-force transmitting apparatus 10, so that the foreign substances can be crushed by a larger load. Therefore, the foreign substances such as the foam resin can be crushed into smaller pieces or powders, whereby the clogging of the filters 88a, 90a of the respective strainers 88, 90 can be more reliably suppressed.

Further, the gear-room-side opening 98a is provided in a position close to a region of the bearing 74a in a circumferential direction of the outer race 102 of the bearing 74a in which a load applied to the bearing 74a during running of the vehicle is small, so that the oil is moved from the region of the bearing 74a to another region of the bearing 74a to which a larger load is applied to the bearing 74a. Therefore, with rotation of the bearing 74a, the oil is caused to flow from the above-described region of the bearing 74a to which the smaller load is applied, to the above-described another region of the bearing 74a to which the larger load is applied.

In FIG. 4, arrow F1 radially extending from the fourth axis CL4 corresponds to a power running load F1 that is to be applied to the bearing 74a during forward running of the vehicle, and arrow F2 radially extending from the fourth axis C4 corresponds to a regenerative load F2 that is to be applied to the bearing 74s during regenerative running of the vehicle. As shown in FIG. 4, the position of the gear-room-side opening 98a is distant from these arrows F1, F2 in the circumferential direction of the outer race 102 of the bearing 74a. That is, the position of the gear-room-side opening 98a is close to the region of the bearing 74 in which the load applied to the bearing 74 is small. Therefore, the oil is caused to flow into the gap 110 of the bearing 74a from the region in which the load applied to the bearing 74a is small, and is then moved to the another region in which the load applied to the bearing 74a is large, by rotation of the bearing 74a, whereby the foreign substances contained in the oil can be efficiently crushed.

As described above, in the present embodiment, the gear-room-side opening 98a of the communication hole 98 is provided in the inner circumferential wall 108 of the axle case 44b in which the bearing 74a is held, and is in held in communication with the gap 110 defined between the inner race 104 and the outer race 102 of the bearing 74a. Owing to this construction, the oil, which has been moved from the motor room 80 to the gear room 78 through the communication hole 98, is caused to flow into the gap 110 of the bearing 74a. In this instance, when the oil is passing through the gap 110 of the bearing 74a, the foreign substances mixed or contained in the oil are crushed by the bearing 74a into smaller pieces. Therefore, for example, when the oil stored in the casing 44 is pumped up by the oil pumps PI, P2 through the respective strainers 88, 90, it is possible to suppress clogging of each of the filters 88a, 90a of the respective strainers 88, 90.

In the above-described embodiment, when the foam resin is mixed into the oil in process of cooling the second electric motor MG2 by the oil, it is possible to cause the foam resin to be crushed by the bearing 74a. Further, the bearing 74a is constituted by the tapered roller bearing, it is possible to increase the areas of the surfaces by which the foreign substances are to be crushed, as compared with an arrangement in which the bearing 74a is constituted by another type of bearing such as a ball bearing, whereby the foreign substances can be efficiently crushed. Still further, the gear-room-side opening 98a of the communication hole 98 is located in the position closer to the roller-small-diameter-side end face of the tapered roller bearing 74a than to the roller-large-diameter-side end face of the tapered roller bearing 74a, so that much of the oil flowing out through the gear-room-side opening 98a can be efficiently introduced into the bearing 74a, by utilizing flow of the oil, which is forced to be drawn in the direction away from the small-diameter axial end face of the tapered roller bearing 74a toward the large-diameter axial end face of the tapered roller bearing 74a, when the tapered roller bearing 74a is rotated. Moreover, since a large load is to be applied to the bearing 74a supporting the differential device 28, the foreign substances contained in the oil can be efficiently crushed by the bearing 74a in process of lubricating the bearing 74a by the oil.

While the preferred embodiment of this invention has been described in detail by reference to the drawings, it is to be understood that the invention may be otherwise embodied.

For example, in the above-described embodiment, in the above-described embodiment, the lubrication device 81 is constructed such that the oil having cooled the second electric motor MG2 is to be supplied to the bearing 74a through the communication hole 98. However, the lubrication device 81 may be constructed such that the oil is to be supplied to the bearing 74a through another oil passage or passages in addition to the communication hole 98. For example, it is possible to provide, in addition to the communication hole 98, another communication hole or holes held in communication with the bearing 74a in the gear room 78, such that a part of the oil scooped up by the differential ring gear 40 and/or a part of the oil pumped up by the first oil pump P1 can be supplied to the another communication hole or holes. In this arrangement with the another communication hole or holes, the part of the oil scooped up by the differential ring gear 40 and/or the part of the oil pumped up by the first oil pump P1 are additionally supplied to the bearing 74a whereby an amount of the oil supplied to the bearing 74a can be increased. Consequently, a larger amount of the foreign substances can be crushed by the bearing 74a so that it is possible to more effectively suppress the clogging of each of the filters 88a, 90a of the respective strainers 88, 90.

In the above-described embodiment, the bearing 74a is constituted by the tapered roller bearing. However, the bearing 74a may be constituted by any other type bearing such as a cylindrical roller bearing.

In the above-described embodiment, the lubrication device 81 is constructed such that the oil flowing out of the communication hole 98 through the gear-room-side opening 98a is to be supplied to the bearing 74a supporting the differential device 28. However, the lubrication device 81 may be modified such that the oil flowing out of the communication hole 98 through the gear-room-side opening 98a is to be supplied to another bearing such as the bearings 70a, 72a supporting another rotary member.

It is to be understood that the embodiment described above is given for illustrative purpose only, and that the present invention may be embodied with various modifications and improvements which may occur to those skilled in the art.

### NOMENCLATURE OF ELEMENTS

10: vehicle drive-force transmitting apparatus
28: differential device (gear mechanism)
44: casing
45: oil reservoir
48: partition wall
60: stator core
66: stator coil
69: insulation sheet
71: foam resin layer
74a: bearing (tapered roller bearing)
78: gear room
80: motor room
81: lubrication device
88: first strainer (strainer)
90: second strainer (strainer)
98: communication hole
98a: gear-room-side opening
98b: motor-room-side opening
102: outer race
104: inner race
108: inner circumferential wall (bearing holding wall)
110: gap
MG2: second electric motor (motor)
P1 :first oil pump (oil pump)
P2: second oil pump (oil pump)

## Claims

1. A lubrication device (81) for a vehicle drive-force transmitting apparatus (10) that includes a casing (44), such that an interior of the casing (44) is sectioned by a partition wall (48) into a gear room (78) and a motor room (80), and such that a gear mechanism (28) is disposed in the gear room (78) while a motor (MG2) is disposed in the motor room (80),
wherein the lubrication device (81) comprises a communication hole (98) provided through the partition wall (48) and communicating between the gear room (78) and the motor room (80), the communication hole (98) having a gear-room-side opening (98a) and a motor-room-side opening (98b), such that the communication hole (98) opens at the gear-room-side opening (98a) in the gear room (78) and opens at the motor-room-side opening (98b) in the motor room (80),
wherein the motor-room-side opening (98b) is located on an upper side of a bearing (74a) which supports the gear mechanism (28) and which is held in a bearing holding wall (108) of the casing (44), and
wherein the gear-room-side opening (98a) is provided in the bearing holding wall (108), and is in held in communication with a gap (110) defined between an inner race (102) and an outer race (104) of the bearing (74a).

2. The lubrication device (81) according to claim 1,
wherein the motor (MG2) includes a stator core (60), a plurality of stator coils (66) wound on the stator core (60) and a plurality of insulation sheets (69) each including at least one foam resin layer (71), and
wherein each of the insulation sheets (69) is interposed between the stator core (60) and a corresponding one of the stator coils (66).

3. The lubrication device (81) according to claim 1 or 2, wherein the bearing (74a) supporting the gear mechanism (28) is a tapered roller bearing (74a).

4. The lubrication device (81) according to claim 3,
wherein the tapered roller bearing (74a) includes a plurality of tapered rollers (106) disposed between the inner and outer races (102, 104),
wherein each of the tapered rollers (106) has a small-diameter axial end face and a large-diameter axial end face that has a diameter larger than a diameter of the small-diameter axial end face,
wherein the tapered roller bearing (74a) has a roller-small-diameter-side end face and a roller-large-diameter-side end face, such that the small-diameter axial end face of each of the tapered rollers (106) constitutes a part of the roller-small-diameter-side end face of the tapered roller bearing (74a) while the large-diameter axial end face of each of the tapered rollers (106) constitutes a part of the roller-large-diameter-side end face of the tapered roller bearing (74a), and
wherein the gear-room-side opening (98a) of the communication hole (98) is located in a position closer to the roller-small-diameter-side end face of the tapered roller bearing (74a) than to the roller-large-diameter-side end face of the tapered roller bearing (74a).

5. The lubrication device (81) according to any one of claims 1-4, wherein the gear mechanism (28) is a differential device (28).

6. The lubrication device (81) according to any one of claims 1-5, comprising:
an oil reservoir (45) provided in a lower portion of the gear room (78), so as to store therein an oil; and
an oil pump (PT1, PT2) by which the oil is to be pumped up through a strainer (88, 90) and is to be supplied to the motor (MG2) disposed in the motor room (80).
